# EUROPÄISCHE PATENTSCHRIFT

(11) **EP 3 649 374 B1**
(45) Veröffentlichungstag und Bekanntmachung des Hinweises auf die Patenterteilung: **24.03.2021**
(21) Anmeldenummer: 18738211.4
(22) Anmeldetag: 25.06.2018
(51) Int. Cl.: F16H 3/66, B60K 1/00

(54) **GETRIEBEVORRICHTUNG FÜR EINEN ELEKTRISCHEN ANTRIEB EINES KRAFTFAHRZEUGS, SOWIE ELEKTRISCHER ANTRIEB FÜR EIN KRAFTFAHRZEUG**
TRANSMISSION DEVICE FOR AN ELECTRIC DRIVE OF A MOTOR VEHICLE, AND ELECTRIC DRIVE FOR A MOTOR VEHICLE
DISPOSITIF D'ENGRENAGE POUR UN GROUPE PROPULSEUR ÉLECTRIQUE D'UN VÉHICULE AUTOMOBILE, ET GROUPE PROPULSEUR ÉLECTRIQUE D'UN VÉHICULE AUTOMOBILE

(30) Priorität: 01.07.2017 DE 102017006266
(43) Veröffentlichungstag der Anmeldung: 13.05.2020
(73) Patentinhaber: Daimler AG, 70372 Stuttgart (DE)
(72) Erfinder: SCHILDER, Tobias, 70794 Filderstadt (DE); HAERTER, Tobias, 70174 Stuttgart (DE); RIEDL, Klaus, 72074 Tübingen (DE)
(74) Vertreter: JENSEN & SON
(86) Internationale Anmeldenummer: PCT/EP2018/066877
(87) Internationale Veröffentlichungsnummer: WO 2019/007724

(56) Entgegenhaltungen:
- WO-A1-2014/029650
- DE-A1-102015 207 504
- DE-B3-102012 007 656
- JP-A- H0 526 309

## Beschreibung

Die Erfindung betrifft eine Getriebevorrichtung für einen elektrischen Antrieb eines Kraftfahrzeugs, insbesondere eines Kraftwagens, gemäß dem Oberbegriff von Patentanspruch 1. Ferner betrifft die Erfindung einen elektrischen Antrieb für ein Kraftfahrzeug, insbesondere für einen Kraftwagen, gemäß dem Oberbegriff von Patentanspruch 8.

Ähnliche Getriebevorrichtungen sind zum Beispiel aus der JP H05 26309 A, der DE 10 2012 007 656 B3 und der WO 2014/029650 A1 bekannt.

Solche Getriebevorrichtungen für einen elektrischen Antrieb eines Kraftfahrzeugs, insbesondere eines Kraftwagens, sowie ein solcher elektrischer Antrieb für ein Kraftfahrzeug, insbesondere für einen Kraftwagen, sind beispielsweise auch bereits aus der DE 10 2015 204 578 A1 sowie der gattungsgemäßen DE 10 2015 209 647 A1 bekannt. Der elektrische Antrieb weist dabei wenigstens eine elektrische Maschine mit einem Rotor auf, welcher beispielsweise um eine Drehachse relativ zu einem Stator drehbar ist. Außerdem umfasst der elektrische Antrieb eine Getriebevorrichtung, welche ein Gehäuse, und einen in dem Gehäuse angeordneten ersten Planetenradsatz umfasst. Der erste Planetenradsatz weist ein erstes Sonnenrad, einen ersten Planetenträger und ein erstes Hohlrad auf. Ferner umfasst die Getriebevorrichtung einen in dem Gehäuse angeordneten zweiten Planetenradsatz, welcher ein zweites Sonnenrad, einen zweiten Planetenträger und ein zweites Hohlrad aufweist. Das zweite Hohlrad ist dabei permanent drehfest mit dem ersten Planetenträger gekoppelt beziehungsweise verbunden. Außerdem umfasst die Getriebevorrichtung eine von dem Rotor der elektrischen Maschine antreibbare Eingangswelle und eine Ausgangswelle, mittels welcher wenigstens ein Rad des Kraftfahrzeugs beziehungsweise das Kraftfahrzeug insgesamt antreibbar ist.

Weiterhin ist aus der DE 10 2015 207 504 A1 eine Getriebevorrichtung mit drei Planetenradsätzen bekannt.

Aufgabe der vorliegenden Erfindung ist es, eine Getriebevorrichtung und einen elektrischen Antrieb der eingangs genannten Art derart weiterzuentwickeln, dass sich eine besonders kompakte Bauweise und ein besonders verlustarmer Betrieb realisieren lassen.

Diese Aufgabe wird durch eine Getriebevorrichtung mit den Merkmalen des Patentanspruchs 1 sowie durch einen elektrischen Antrieb mit den Merkmalen des Patentanspruchs 8 gelöst. Vorteilhafte Ausgestaltungen mit zweckmäßigen Weiterbildungen der Erfindung sind in den übrigen Ansprüchen angegeben.

Um eine Getriebevorrichtung der im Oberbegriff des Patentanspruchs 1 angegebenen Art darzustellen, ist vorgesehen, dass die Eingangswelle permanent drehfest mit dem ersten Sonnenrad verbunden beziehungsweise gekoppelt ist. Ferner ist es vorgesehen, dass das erste Hohlrad drehfest mit dem zweiten Sonnenrad gekoppelt oder koppelbar ist. Hierunter ist insbesondere zu verstehen, dass das erste Hohlrad beispielsweise permanent drehfest mit dem zweiten Sonnenrad gekoppelt beziehungsweise verbunden ist. Alternativ ist es denkbar, dass das erste Hohlrad mit dem zweiten Sonnenrad drehfest koppelbar beziehungsweise verbindbar ist. Unter einer permanent drehfesten Kopplung beziehungsweise Verbindung ist im Rahmen der Erfindung zu verstehen, dass beispielsweise ein erstes Bauelement wie beispielsweise das zweite Hohlrad, die Eingangswelle oder das erste Hohlrad mit einem zweiten Bauelement wie beispielsweise dem ersten Planetenträger, dem ersten Sonnenrad oder dem zweiten Sonnenrad permanent drehfest verbunden beziehungsweise gekoppelt ist, sodass dabei keine Kopplungseinrichtung vorgesehen ist, mittels welcher diese permanent drehfeste Kopplung aufgehoben werden könnte beziehungsweise welche zwischen einem die drehfeste Kopplung bewirkenden Koppelzustand und einem die drehfeste Kopplung aufhebenden Entkoppelzustand umschaltbar ist.

Weiter wird davon ausgegangen, dass die Getriebevorrichtung einen in dem Gehäuse angeordneten dritten Planetenradsatz umfasst, welcher ein drittes Sonnenrad, einen dritten Planetenträger und ein drittes Hohlrad aufweist. Durch die Verwendung des dritten Planetenradsatzes kann eine besonders vorteilhafte Übersetzung auf gewichts- und bauraumgünstige Weise realisiert werden, wobei ferner ein besonders verlustarmer und somit effizienter Betrieb darstellbar ist.

Um dabei einen besonders vorteilhaften und insbesondere verlustarmen Betrieb realisieren zu können, wird ferner wie im Stand der Technik davon ausgegangen, dass das dritte Sonnenrad mit dem zweiten Sonnenrad permanent drehfest verbunden beziehungsweise gekoppelt ist.

Erfindungsgemäß ist vorgesehen, dass ein drittes Schaltelement vorgesehen ist, mittels welchem das dritte Hohlrad oder der dritte Planetenträger an dem Gehäuse festlegbar ist. Das dritte Schaltelement ist beispielsweise zwischen wenigstens einem Sperrzustand und wenigstens einem Freigabezustand umschaltbar, insbesondere bewegbar. In dem Sperrzustand ist beispielsweise das dritte Hohlrad beziehungsweise der dritte Planetenträger mittels des dritten Schaltelements drehfest an dem Gehäuse festgelegt, sodass sich das dritte Hohlrad beziehungsweise der dritte Planetenträger nicht, insbesondere um die Hauptdrehachse, relativ zu dem Gehäuse drehen kann, insbesondere auch dann nicht, wenn die Getriebevorrichtung angetrieben wird. In dem Freigabezustand jedoch gibt das dritte Schaltelement das dritte Hohlrad beziehungsweise den dritten Planetenträger frei, sodass insbesondere dann, wenn die Getriebevorrichtung angetrieben wird, sich das dritte Hohlrad beziehungsweise der dritte Planetenträger, insbesondere um die Hauptdrehachse, relativ zu dem Gehäuse drehen kann.

Im Rahmen der Erfindung ist unter einer drehfesten Koppelbarkeit zu verstehen, dass eine Kopplungseinrichtung vorgesehen ist, welche zwischen wenigstens einem Koppelzustand und wenigstens einem Entkoppelzustand umschaltbar, insbesondere bewegbar, ist. In dem Koppelzustand ist beispielsweise ein erstes Bauelement wie beispielsweise das erste Hohlrad über die Kopplungseinrichtung drehfest mit einem zweiten Bauelement wie beispielsweise mit dem zweiten Sonnenrad verbunden beziehungsweise gekoppelt. In dem Entkoppelzustand jedoch ist das erste Bauelement von dem zweiten Bauelement entkoppelt, sodass sich das erste Bauelement relativ zu dem zweiten Bauelement drehen kann beziehungsweise umgekehrt.

Unter einer drehfesten Kopplung zweier Elemente ist dabei zu verstehen, dass die beiden Elemente in dem drehfest gekoppelten Zustand koaxial angeordnet sind und derart gekoppelt sind, dass sie mit gleicher Winkelgeschwindigkeit drehen.

Es können ein besonders verlustarmer Betrieb und eine kompakte Bauweise mittels der erfindungsgemäßen Getriebevorrichtung realisiert werden, da die Planetenradsätze, welche auch als Radsätze bezeichnet werden, eine besonders vorteilhafte Gesamtübersetzung zur Verfügung stellen können, sodass beispielsweise kein weiterer Endantrieb, welcher auch als Final Drive bezeichnet wird, erforderlich ist. Außerdem können die Teileanzahl und somit das Gewicht, die Kosten und der Bauraumbedarf der Getriebevorrichtung besonders gering gehalten werden, wobei gleichzeitig eine besonders vorteilhafte Übersetzung realisierbar ist.

In vorteilhafter Ausgestaltung der Erfindung ist ein erstes Schaltelement vorgesehen, mittels welchem das erste Hohlrad an dem Gehäuse festlegbar ist. Unter einer solchen Festlegung des ersten Hohlrads beziehungsweise eines Bauteils an dem Gehäuse ist insbesondere zu verstehen, dass dann, wenn das erste Hohlrad beziehungsweise das Bauteil an dem Gehäuse festgelegt ist, sich das erste Hohlrad beziehungsweise das Bauteil nicht relativ zu dem Gehäuse drehen kann. Das Schaltelement ist dabei beispielsweise zwischen einem Freigabezustand und einem Sperrzustand umschaltbar, insbesondere bewegbar. In dem Sperrzustand ist das Bauteil beziehungsweise das erste Hohlrad über das erste Schaltelement drehfest an dem Gehäuse festgelegt, sodass sich das erste Hohlrad beziehungsweise das Bauteil nicht relativ zu dem Gehäuse drehen kann. In dem Freigabezustand jedoch gibt das erste Schaltelement das erste Hohlrad beziehungsweise das Bauteil frei, sodass sich das erste Hohlrad beziehungsweise das Bauteil, insbesondere um eine Hauptdrehachse, relativ zu dem Gehäuse drehen kann, insbesondere dann, wenn die Getriebevorrichtung angetrieben wird, das heißt wenn beispielsweise von der elektrischen Maschine über den Rotor bereitgestellte Drehmomente über die Eingangswelle in die Getriebevorrichtung eingeleitet werden.

Eine weitere Ausführungsform zeichnet sich dadurch aus, dass ein zweites Schaltelement vorgesehen ist, mittels welchem der zweite Planetenträger an dem Gehäuse festlegbar ist. Es ist beispielsweise vorgesehen, dass das zweite Schaltelement zwischen einem Freigabezustand und einem Sperrzustand umschaltbar ist. In dem Sperrzustand ist der zweite Planetenträger mittels des zweiten Schaltelements an dem Gehäuse drehfest festgelegt, sodass sich der zweite Planetenträger nicht mehr relativ zu dem Gehäuse drehen kann. In dem Freigabezustand gibt jedoch das zweite Schaltelement den zweiten Planetenträger frei, sodass sich beispielsweise dann der zweite Planetenträger, insbesondere um die genannte Hauptdrehachse, relativ zu dem Gehäuse drehen kann, insbesondere dann, wenn die Getriebevorrichtung angetrieben wird.

Dabei hat es sich als besonders vorteilhaft gezeigt, wenn mittels des dritten Schaltelements das dritte Hohlrad an dem Gehäuse drehfest festlegbar ist, wobei der dritte Planetenträger permanent drehfest mit dem zweiten Planetenträger gekoppelt ist. Hierdurch kann auf verlustarme Weise eine besonders vorteilhafte Übersetzung realisiert werden.

Um dabei den Bauraumbedarf der Getriebevorrichtung besonders gering halten zu können, ist es in weiterer Ausgestaltung der Erfindung vorgesehen, dass der zweite Planetenradsatz und der dritte Planetenradsatz einen inversen Ravigneaux-Satz bilden. Während beispielsweise ein herkömmlicher Ravigneaux-Satz ein gemeinsames Hohlrad, einen gemeinsamen Planetenträger und zwei, insbesondere verschieden große, Sonnenräder sowie kurze Planeten und lange Planeten aufweist, zeichnet sich im Unterschied dazu der inverse Ravigneaux-Satz beispielsweise dadurch aus, dass der inverse Ravigneaux-Satz ein Sonnenrad und zwei Hohlräder aufweist. Das Sonnenrad kämmt beispielsweise mit den langen Planetenrädern, nicht jedoch mit den kurzen Planetenrädern. Die langen Planetenräder kämmen beispielsweise mit dem Sonnenrad, mit einem ersten der Hohlräder und mit den kurzen Planetenrädern, wobei die langen Planetenräder jedoch nicht mit dem zweiten Hohlrad kämmen. Die kurzen Planetenräder kämmen beispielsweise mit den langen Planetenrädern und dem zweiten Hohlrad, nicht jedoch mit dem ersten Hohlrad. Hierdurch kann auf bauraumgünstige Weise eine besonders vorteilhafte Übersetzung dargestellt werden.

Bei einer besonders vorteilhaften Ausführungsform der Erfindung umfasst die Getriebevorrichtung ein Achsgetriebe, welches beispielsweise als Differentialgetriebe beziehungsweise als Differential ausgebildet ist. Insbesondere ist das Achsgetriebe beispielsweise als Kegelraddifferential ausgebildet. Das Achsgetriebe weist dabei eine Funktion auf, welche aus dem allgemeinen Stand der Technik bereits hinlänglich bekannt ist und im Folgenden nur kurz erläutert wird. Beispielsweise lässt das Achsgetriebe einen Drehzahlausgleich zwischen zwei von der elektrischen Maschine antreibbaren Rädern des Kraftfahrzeugs zu, sodass sich beispielsweise die Räder, insbesondere bei einer Kurvenfahrt des Kraftfahrzeugs, mit unterschiedlichen Drehzahlen drehen können, insbesondere während die Räder von der elektrischen Maschine über den Rotor angetrieben werden. Bei einer solchen Kurvenfahrt lässt das Achsgetriebe beispielsweise zu, dass sich das kurvenäußere Rad mit einer höheren Drehzahl als das kurveninnere Rad dreht, ohne dass es zu übermäßigen Verspannungen der Getriebevorrichtung kommt. Um dabei den Bauraumbedarf besonders gering halten zu können, weist das Achsgetriebe wenigstens eine Seitenwelle auf, die koaxial zu der Eingangswelle angeordnet ist. Über die Seitenwelle ist beispielsweise eines der Räder beziehungsweise das vorgenannte Rad, insbesondere von der elektrischen Maschine über deren Rotor, antreibbar.

Schließlich hat es sich als besonders vorteilhaft gezeigt, wenn das jeweilige Schaltelement als formschlüssiges Schaltelement ausgebildet ist. Hierbei ist das jeweilige Schaltelement beispielsweise als Klaue beziehungsweise als Klauenkupplung ausgebildet, wodurch sich ein besonders effizienter Betrieb realisieren lässt. Dabei kann die Klaue mit oder ohne Synchronisierung ausgestattet sein. Die Verwendung einer solchen Synchronisierung ermöglich eine Lastschaltfähigkeit des Schaltelements und somit der Getriebevorrichtung, sodass ein besonders vorteilhafter Betrieb realisierbar ist. Ferner ist es vorzugsweise vorgesehen, dass das jeweilige Schaltelement als reibschlüssiges Schaltelement ausgebildet ist, wodurch eine besonders vorteilhafte Lastschaltfähigkeit realisiert werden kann. Das reibschlüssige Schaltelement ist dabei beispielsweise als Lamellenbremse beziehungsweise als Lamellenkupplung oder aber als Bremsband ausgeführt.

Insbesondere ist es möglich, die Getriebevorrichtung als eine lastschaltfähige Getriebestruktur, insbesondere für elektrische Antriebe, in koaxialer beziehungsweise achsparalleler und dabei bauraumoptimaler Bauweise mit geringer Verlustleistung auszugestalten. Dabei lassen sich mehrere, insbesondere genau zwei oder genau drei, Fahrgänge darstellen, welche für eine Vorwärts- und für eine Rückwärtsfahrt verwendbar sind. Ein erster der Fahrgänge soll beispielsweise einen Anhängerbetrieb ermöglichen. Außerdem ist der erste Fahrgang für Kriechvorgänge vorgesehen, um beispielsweise die elektrische Maschine und deren Leistungselektronik vor Überhitzung schützen zu können. Wie bereits angedeutet, kann wenigstens eines der Schaltelemente gegebenenfalls als Klauenkupplung mit oder ohne Synchronisiereinheit ausgeführt werden, wodurch Verluste besonders gering gehalten werden können. Durch die geschickte Kopplung der Planetenradsätze und der Einsatz von Schaltelementen ist ein besonders vorteilhafter Betrieb darstellbar. Insbesondere ist es denkbar, dass ausschließlich reibschlüssige Schaltelemente zum Einsatz kommen, wobei die Schaltelemente beispielsweise als Bremsen ausgebildet sind. Ferner ist es denkbar, dass die Planetenradsätze zu stapeln, um weitere Optimierungen zu realisieren.

Außerdem kann mittels der erfindungsgemäßen Getriebevorrichtung ein Modulbaukasten dargestellt werden, mittels welchem auf einfache Weise zwei oder drei Fahrgänge, eine koaxiale Anordnung oder eine achsparallele Anordnung realisiert werden kann. Ferner ist es möglich, mit nur zwei oder drei Planetenradsätzen eine besonders vorteilhafte Übersetzung darzustellen, sodass der Bauraumbedarf und das Gewicht der Getriebevorrichtung besonders gering gehalten werden können. Insbesondere ist es vorzugsweise vorgesehen, dass zumindest eines der zum Einsatz kommenden Schaltelemente als formschlüssiges Schaltelement und somit beispielsweise als Klauenkupplung ausgeführt ist, um einen besonders verlustarmen Betrieb realisieren zu können. Bei der erfindungsgemäßen Getriebevorrichtung ist es insbesondere möglich, in offen laufenden Schaltelementen Relativdrehzahlen besonders gering zu halten. Ferner können in den Planetenradsätzen die Relativdrehzahlen besonders gering gehalten werden, sodass ein besonders verlustarmer Betrieb darstellbar ist. Werden als die Schaltelemente beispielsweise reibschlüssige Schaltelemente, insbesondere Bremsen, verwendet, so sind diese sehr gut zugänglich.

Dadurch, dass die Getriebevorrichtung mehrere Gänge, insbesondere Fahrgänge, aufweisen kann, kann eine Mehrgängigkeit der Getriebevorrichtung auf einfache Weise dargestellt werden. Durch diese Mehrgängigkeit können Drehzahlen der elektrischen Maschine, insbesondere des Rotors, auch bei hohen Geschwindigkeiten besonders gering gehalten werden, sodass ein verlustarmer Betrieb gewährleistet werden kann.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung eines elektrischen Antriebs für ein Kraftfahrzeug gemäß einer ersten Ausführungsform, die nicht unter den Wortlaut des Anspruchs 1 fällt;
- Fig. 2: eine schematische Darstellung einer Getriebevorrichtung des elektrischen Antriebs gemäß einer zweiten Ausführungsform, die nicht unter den Wortlaut des Anspruchs 1 fällt;
- Fig. 3: eine schematische Darstellung der Getriebevorrichtung gemäß einer dritten Ausführungsform, die nicht unter den Wortlaut des Anspruchs 1 fällt;
- Fig. 4: eine schematische Darstellung der Getriebevorrichtung gemäß einer vierten Ausführungsform, die nicht unter den Wortlaut des Anspruchs 1 fällt;
- Fig. 5: eine schematische Darstellung der Getriebevorrichtung gemäß einer fünften Ausführungsform, die nicht unter den Wortlaut des Anspruchs 1 fällt;
- Fig. 6: eine schematische Darstellung der Getriebevorrichtung gemäß einer sechsten Ausführungsform, die nicht unter den Wortlaut des Anspruchs 1 fällt;
- Fig. 7: eine schematische Darstellung der Getriebevorrichtung gemäß einer siebten Ausführungsform, die nicht unter den Wortlaut des Anspruchs 1 fällt;
- Fig. 8: eine schematische Darstellung der Getriebevorrichtung gemäß einer achten Ausführungsform, die nicht unter den Wortlaut des Anspruchs 1 fällt;
- Fig. 9: eine schematische Darstellung der Getriebevorrichtung gemäß einer neunten Ausführungsform, die nicht unter den Wortlaut des Anspruchs 1 fällt;
- Fig. 10: eine schematische Darstellung der Getriebevorrichtung gemäß einer zehnten Ausführungsform, die nicht unter den Wortlaut des Anspruchs 1 fällt;
- Fig. 11: eine schematische Darstellung der Getriebevorrichtung gemäß einer elften Ausführungsform;
- Fig. 12: eine schematische Darstellung der Getriebevorrichtung gemäß einer zwölften Ausführungsform;
- Fig. 13: eine schematische Darstellung der Getriebevorrichtung gemäß einer 13. Ausführungsform;
- Fig. 14: eine schematische Darstellung der Getriebevorrichtung gemäß einer 14. Ausführungsform;
- Fig. 15: eine schematische Darstellung der Getriebevorrichtung gemäß einer 15. Ausführungsform, die nicht unter den Wortlaut des Anspruchs 1 fällt;
- Fig. 16: eine schematische Darstellung der Getriebevorrichtung gemäß einer 16. Ausführungsform, die nicht unter den Wortlaut des Anspruchs 1 fällt;
- Fig. 17: eine schematische Darstellung der Getriebevorrichtung gemäß einer 17. Ausführungsform;
- Fig. 18: eine schematische Darstellung der Getriebevorrichtung gemäß einer 18. Ausführungsform;
- Fig. 19: eine schematische Darstellung der Getriebevorrichtung gemäß einer 19. Ausführungsform; und
- Fig. 20: eine schematische Darstellung der Getriebevorrichtung gemäß einer 20. Ausführungsform.

In den Fig. sind gleiche oder funktionsgleiche Elemente mit gleichen Bezugszeichen versehen.

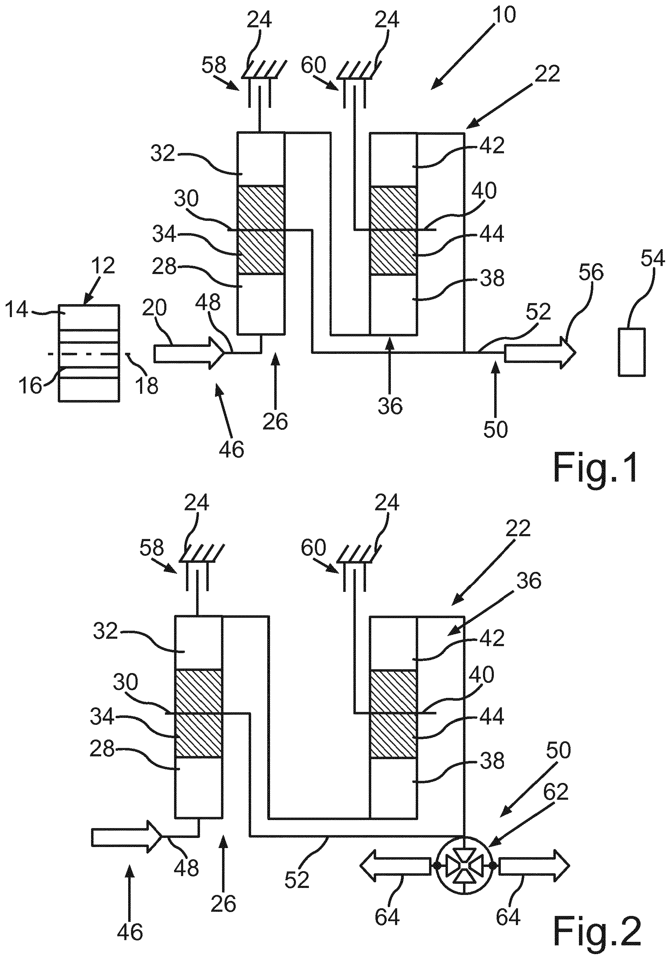

Fig. 1 zeigt in einer schematischen Darstellung eine erste Ausführungsform eines im Ganzen mit 10 bezeichneten elektrischen Antriebs für ein Kraftfahrzeug, insbesondere für einen Kraftwagen wie beispielsweise einen Personenkraftwagen. Der elektrische Antrieb 10 umfasst wenigstens eine elektrische Maschine 12, welche zumindest in einem Motorbetrieb und somit als Elektromotor betreibbar ist. Die elektrische Maschine 12 umfasst einen Stator 14 und einen Rotor 16, welcher um eine Drehachse 18 relativ zu dem Stator 14 drehbar ist. Dabei ist der Rotor 16 von dem Stator 14 antreibbar und dadurch um die Drehachse 18 relativ zu dem Stator 14 drehbar, sodass die elektrische Maschine 12 in ihrem Motorbetrieb über den Rotor 16 Drehmomente bereitstellen kann. Eines dieser von der elektrischen Maschine 12 über den Rotor 16 bereitgestellten Drehmomente ist in Fig. 1 durch einen Pfeil 20 veranschaulicht.

Der elektrische Antrieb 10 umfasst ferner eine Getriebevorrichtung 22, welche wenigstens ein in Fig. 1 besonders schematisch dargestelltes Gehäuse 24 aufweist. Die Getriebevorrichtung 22 umfasst einen in dem Gehäuse 24 angeordneten ersten Planetenradsatz 26, welcher ein erstes Sonnenrad 28, einen ersten Planetenträger 30 und ein erstes Hohlrad 32 aufweist. Ferner umfasst der erste Planetenradsatz 26 wenigstens ein oder mehrere erste Planetenräder 34, wobei das wenigstens eine erste Planetenrad 34 drehbar an dem ersten Planetenträger 30 gelagert ist und dabei mit dem Sonnenrad 28 und mit dem Hohlrad 32 kämmt.

Die Getriebevorrichtung 22 umfasst ferner einen zweiten Planetenradsatz 36, welcher ein zweites Sonnenrad 38, einen zweiten Planetenträger 40 und ein zweites Hohlrad 42 aufweist. Außerdem umfasst der zweite Planetenradsatz 36 wenigstens ein oder mehrere zweite Planetenräder 44. Dabei ist das wenigstens eine zweite Planetenrad 44 drehbar an dem zweiten Planetenträger 40 gelagert und kämmt mit dem Hohlrad 42 und mit dem Sonnenrad 38.

Die Getriebevorrichtung 22 weist ferner einen Eingang 46 auf, welcher auch als Antrieb bezeichnet wird und eine Eingangswelle 48 umfasst. Die Eingangswelle 48 ist von der elektrischen Maschine 12, insbesondere von dem Rotor 16, antreibbar. Somit können die von der elektrischen Maschine 12 über den Rotor 16 bereitgestellten Drehmomente auf die Eingangswelle 48, welche auch als Antriebswelle bezeichnet wird, übertragen werden. Dabei ist beispielsweise die Eingangswelle 48 permanent drehfest mit dem Rotor 16 gekoppelt. Ferner ist es denkbar, dass die Eingangswelle 48 mit dem Rotor 16 drehfest koppelbar ist, sodass die Eingangswelle 48 beispielsweise über eine in Fig. 1 nicht gezeigte Koppeleinrichtung von dem Rotor 16 antreibbar ist. Durch das Antreiben der Eingangswelle 48 mittels des Rotors 16 wird das jeweilige, von der elektrischen Maschine 12 über den Rotor 16 bereitgestellte Drehmoment über die Eingangswelle 48 in die Getriebevorrichtung 22 eingeleitet, wodurch diese angetrieben wird.

Die Getriebevorrichtung 22 weist ferner einen Ausgang 50 auf, welcher auch als Abtrieb bezeichnet wird. Der Ausgang 50 beziehungsweise der Abtrieb umfasst eine Ausgangswelle 52, mittels welcher wenigstens ein Rad 54 des Kraftfahrzeugs antreibbar ist. Insbesondere sind mittels der Ausgangswelle 52 mehrere Räder des Kraftfahrzeugs und somit das Kraftfahrzeug insgesamt antreibbar. Die Getriebevorrichtung 22 kann beispielsweise die über die Eingangswelle 48 in die Getriebevorrichtung 22 eingeleiteten Drehmomente umwandeln und über die Ausgangswelle 52 bereitstellen. Die über die Ausgangswelle 52 von der Getriebevorrichtung 22 bereitgestellten Drehmomente werden auch als zweite Drehmomente bezeichnet, wobei ein solches zweites Drehmoment in Fig. 1 durch einen Pfeil 56 veranschaulicht ist.

Aus Fig. 1 ist erkennbar, dass das zweite Hohlrad 42 permanent drehfest mit dem ersten Planetenträger 30 gekoppelt beziehungsweise verbunden ist.

Um nun eine besonders kompakte Bauweise und einen besonders effiziente und somit verlustarmen Betrieb der Getriebevorrichtung 22 und somit des elektrischen Antriebs 10 insgesamt realisieren zu können, ist die Eingangswelle 48 permanent drehfest mit dem ersten Sonnenrad 28 verbunden beziehungsweise gekoppelt. Außerdem ist das erste Hohlrad 32 drehfest mit dem zweiten Sonnenrad 38 gekoppelt oder koppelbar. Fig. 1 zeigt eine erste Ausführungsform, bei welcher das erste Hohlrad 32 permanent drehfest mit dem zweiten Sonnenrad 38 gekoppelt beziehungsweise verbunden ist.

Die Getriebevorrichtung 22 umfasst ein erstes Schaltelement 58, mittels welchem das erste Hohlrad 32 drehfest an dem Gehäuse 24 festlegbar ist. Außerdem ist ein zweites Schaltelement 60 vorgesehen, mittels welchem der zweite Planetenträger 40 drehfest an dem Gehäuse 24 festlegbar ist. Das jeweilige Schaltelement 58 beziehungsweise 60 ist beispielsweise als reibschlüssiges Schaltelement oder aber als formschlüssiges Schaltelement und somit beispielsweise als Klaue beziehungsweise Klauenkupplung ausgebildet. Das jeweilige Schaltelement 58 beziehungsweise 60 ist beispielsweise zwischen einem Sperrzustand und einem Freigabezustand umschaltbar, insbesondere bewegbar. Werden die Eingangswelle 48 und somit das Sonnenrad 28 von der elektrischen Maschine 12 über deren Rotor 16 angetrieben, so drehen sich das Sonnenrad 28 und die Eingangswelle 48 dadurch, dass sie permanent drehfest miteinander verbunden sind, gemeinsam um eine Hauptdrehachse relativ zu dem Gehäuse 24, wobei die Hauptdrehachse koaxial zur Drehachse 18 angeordnet ist beziehungsweise mit dieser zusammenfällt.

Befindet sich das jeweilige Schaltelement 58 beziehungsweise 60 in dem Freigabezustand, so kann sich beispielsweise das Hohlrad 32 beziehungsweise der Planetenträger 40 um die Hauptdrehachse relativ zu dem Gehäuse 24 drehen, insbesondere dann, wenn die Getriebevorrichtung 22 angetrieben wird. Befindet sich jedoch das jeweilige Schaltelement 58 beziehungsweise 60 in dem Sperrzustand, so ist das Hohlrad 32 beziehungsweise der Planetenträger 40 mittels des jeweiligen Schaltelements 58 beziehungsweise 60 drehfest an dem Gehäuse 24 festgelegt, sodass sich das Hohlrad 32 beziehungsweise der Planetenträger 40 nicht relativ zu dem Gehäuse 24 drehen kann, insbesondere auch dann nicht, wenn die Getriebevorrichtung 12 angetrieben wird.

Fig. 2 zeigt eine zweite Ausführungsform der Getriebevorrichtung 22 und somit des elektrischen Antriebs 10 insgesamt, wobei in Fig. 2 der Übersicht wegen die elektrische Maschine 12 und das Rad 54 nicht dargestellt sind. Bei der zweiten Ausführungsform umfasst die Getriebevorrichtung 22 ein beispielsweise als Differential, insbesondere als Kegelraddifferential, ausgebildetes Achsgetriebe 62, über welches - wie in Fig. 2 durch Pfeile 64 veranschaulicht ist -jeweilige, in Fahrzeugquerrichtung voneinander beabstandete Räder einer Achse des Kraftfahrzeugs antreibbar sind. Ein erstes der Räder der Achse ist beispielsweise das Rad 54, wobei das zweite Rad der Achse in den Fig. nicht dargestellt ist. Aus Fig. 2 ist erkennbar, dass das Achsgetriebe 62 von der Ausgangswelle 52 antreibbar ist, sodass über die Ausgangswelle 52 und das Achsgetriebe 62 das Rad 54 beziehungsweise die genannten Räder antreibbar sind. Das Achsgetriebe 62 ermöglicht dabei einen Drehzahlausgleich zwischen den Rädern der Achse, sodass sich insbesondere bei einer Kurvenfahrt des Kraftfahrzeugs die Räder der Achse mit unterschiedlichen Drehzahlen drehen können. Das jeweilige Rad ist beispielsweise über eine jeweilige Seitenwelle des Achsgetriebes 62 von der Ausgangswelle 52 antreibbar, wobei vorzugsweise wenigstens eine der Seitenwellen oder beide Seitenwellen koaxial zur Eingangswelle 48 angeordnet ist beziehungsweise verläuft.

Bei der Getriebevorrichtung 22 beziehungsweise bei dem elektrischen Antrieb 10 lässt sich eine koaxiale oder eine achsparallele Anordnung realisieren, wobei vorteilhafte Wirkungsgrade realisierbar sind.

Bei der in Fig. 1 veranschaulichten ersten Ausführungsform und bei der zweiten Ausführungsform ist eine koaxiale Anordnung der Planetenradsätze 26 und 36 vorgesehen, welche bei der ersten Ausführungsform und der zweiten Ausführungsform in axialer Richtung der Getriebevorrichtung 22, das heißt entlang der Hauptdrehachse, hintereinander beziehungsweise aufeinanderfolgend angeordnet sind. Durch die Verwendung der zwei Planetenradsätze 26 und 36 lassen sich beispielsweise zwei Gänge, das heißt zwei Fahrgänge realisieren.

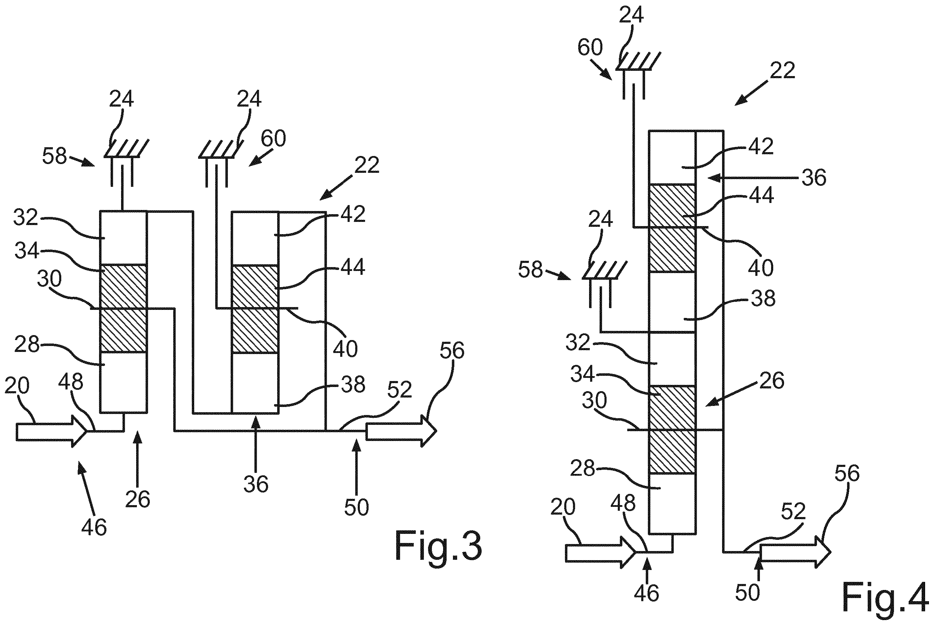

Fig. 3 zeigt eine dritte Ausführungsform, welche auf der ersten Ausführungsform beziehungsweise auf der zweiten Ausführungsform aufbaut. Die dritte Ausführungsform unterscheidet sich insbesondere dadurch von der ersten und der zweiten Ausführungsform, dass der Planetenradsatz 36 in axialer Richtung näher an dem Planetenradsatz 26 angeordnet ist als bei der ersten Ausführungsform beziehungsweise als bei der zweiten Ausführungsform.

Fig. 4 zeigt eine vierte Ausführungsform, bei welcher die Planetenradsätze 26 und 36 gestapelt sind. Somit ist bei der vierten Ausführungsform die zuvor genannte achsparallele Anordnung vorgesehen, bei welcher der zweite Planetenradsatz 36 in radialer Richtung der Getriebevorrichtung 22 und somit des ersten Planetenradsatzes 26 außerhalb dieses angeordnet ist. Mit anderen Worten ist beispielsweise zumindest ein Längenbereich des ersten Planetenradsatzes 26 in radialer Richtung nach außen hin durch den zweiten Planetenradsatz 36 überdeckt, sodass beispielsweise der erste Planetenradsatz 26 zumindest teilweise, insbesondere zumindest überwiegend oder vollständig, in dem zweiten Planetenradsatz 36 angeordnet ist.

Als besonders vorteilhaft hat es sich gezeigt, insbesondere bei der vierten Ausführungsform, wenn das erste Hohlrad 32 eine Außenverzahnung aufweist, durch welche das zweite Sonnenrad 38 gebildet ist. Dadurch kann der Bauraumbedarf, insbesondere in radialer Richtung, besonders gering gehalten werden.

Selbstverständlich kann bei der dritten Ausführungsform beziehungsweise bei der vierten Ausführungsform das Achsgetriebe 62 vorgesehen sein.

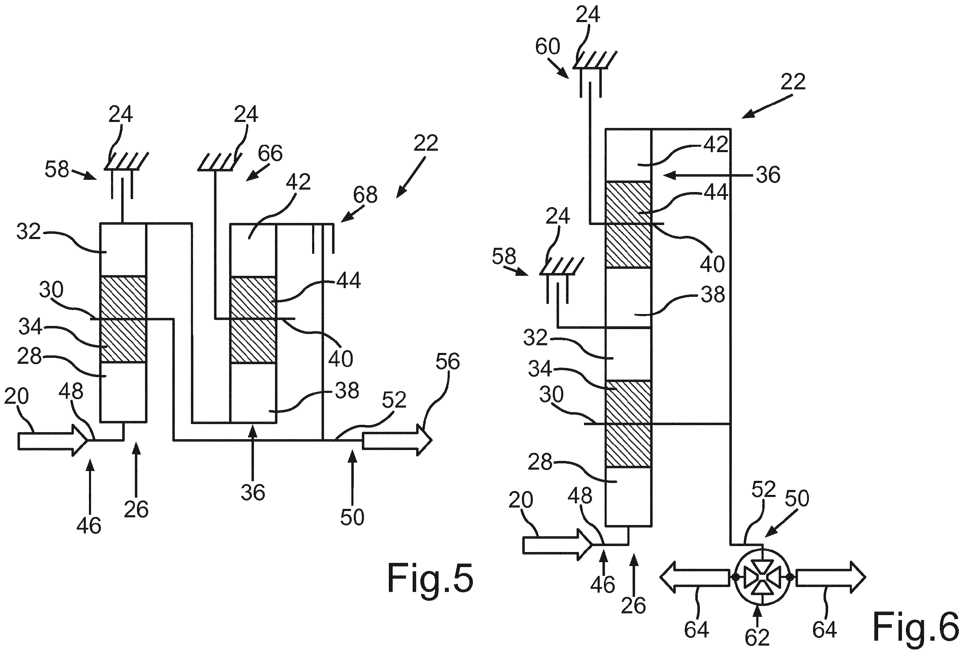

Fig. 5 zeigt eine fünfte Ausführungsform, welche auf der dritten Ausführungsform aufbaut. Im Vergleich mit der dritten Ausführungsform ist bei der fünften Ausführungsform das Schaltelement 60 in ein Festglied 66 und ein Schaltelement 68 umgebaut. Bei der fünften Ausführungsform ist es vorgesehen, dass der Planetenträger 40, insbesondere mittels des Festglieds 66, drehfest an dem Gehäuse 24 festgelegt ist. Ferner ist der Planetenträger 30 mittels des Schaltelements 68 drehfest mit dem Hohlrad 42 koppelbar. Das Schaltelement 68 ist beispielsweise ein Kopplungselement, welches zwischen einem Koppelzustand und einen Entkoppelzustand umschaltbar, insbesondere bewegbar, ist. In dem Koppelzustand ist der Planetenträger 30 über das Schaltelement 68 drehfest mit dem Hohlrad 42 verbunden beziehungsweise gekoppelt, sodass dann der Planetenträger 30 mit dem Hohlrad 42 verblockt ist. Wird dann die Getriebevorrichtung 22 angetrieben, so laufen der Planetenträger 30 und das Hohlrad 42 gemeinsam und somit als Block, insbesondere um die Hauptdrehachse, um und drehen sich somit, insbesondere um die Hauptdrehachse, relativ zu dem Gehäuse 24. In dem Entkoppelzustand jedoch gibt das Schaltelement 38 die Verblockung, das heißt den Planetenträger 30 und das Hohlrad 42 frei, sodass sich das Hohlrad 42 insbesondere dann, wenn die Getriebevorrichtung 22 angetrieben wird, relativ zu dem Planetenträger 30 drehen kann beziehungsweise umgekehrt. Da der Planetenträger 30 permanent drehfest mit der Ausgangswelle 52 verbunden ist, kann das Hohlrad 42 mittels des Schaltelements 68 drehfest mit der Ausgangswelle 52 verbunden werden. Dies bedeutet, dass in dem Koppelzustand des Schaltelements 68 das Hohlrad 42 über das Schaltelement 68 drehfest mit der Ausgangswelle 52 verbunden ist. In dem Entkoppelzustand des Schaltelements 68 jedoch ist das Hohlrad 42 nicht über das Schaltelement 68 drehfest mit der Ausgangswelle 52 gekoppelt, sodass sich beispielsweise die Ausgangswelle 52 relativ zu dem Hohlrad 42 drehen kann beziehungsweise umgekehrt.

Fig. 6 zeigt eine sechste Ausführungsform, welche auf der vierten Ausführungsform aufbaut, wobei bei der Ausführungsform das Achsgetriebe 62 vorgesehen ist.

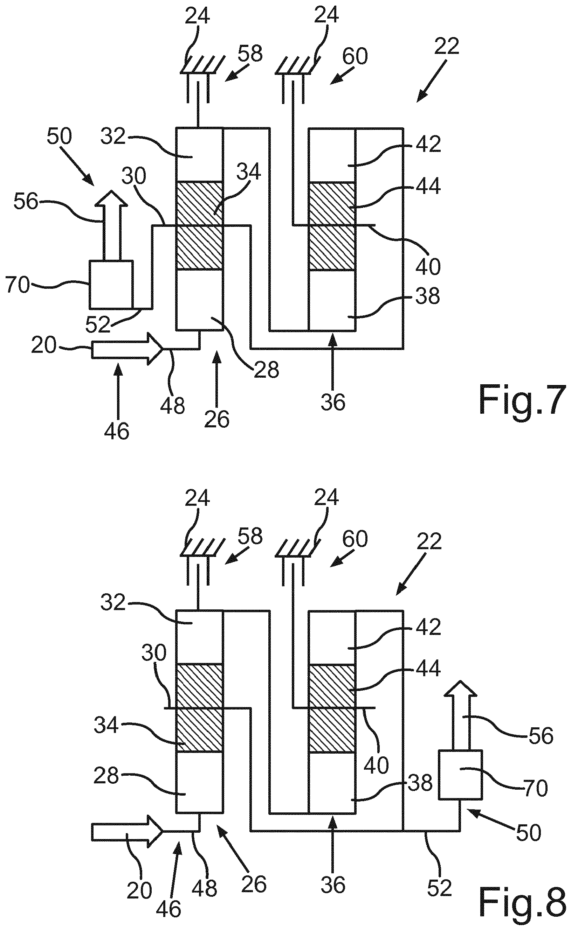

Fig. 7 zeigt eine siebte Ausführungsform, bei welcher beispielsweise der Eingang 46 und der Ausgang 50 auf derselben Seite angeordnet sind. Dabei ist beispielsweise ein insbesondere als Stirnrad ausgebildetes Zahnrad 70 vorgesehen, welches beispielsweise permanent drehfest mit der Ausgangswelle 52 verbunden ist.

Fig. 8 zeigt eine achte Ausführungsform, bei welcher das Zahnrad 70 vorgesehen ist, wobei jedoch bei der achten Ausführungsform wie beispielsweise bei der ersten Ausführungsform der Eingang 46 und der Ausgang 50 auf gegenüberliegenden Seiten angeordnet sind.

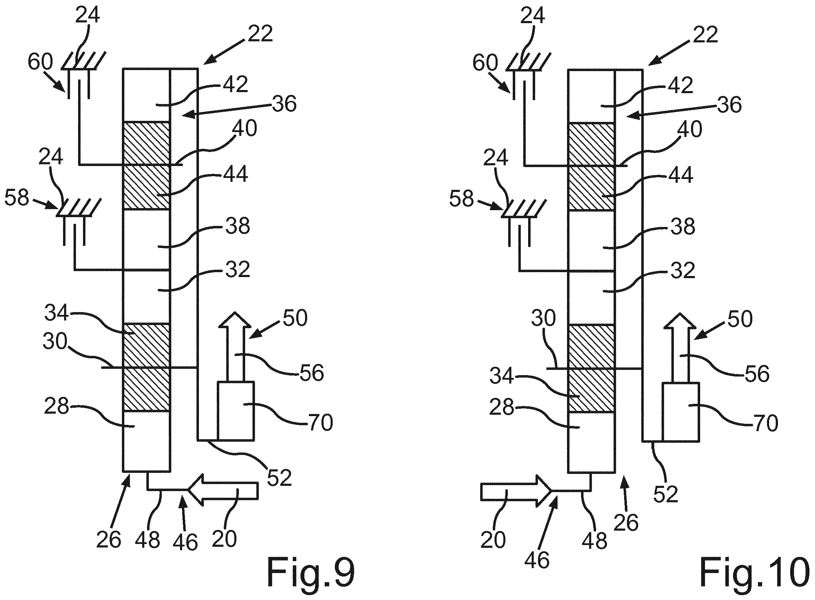

Fig. 9 zeigt eine neunte Ausführungsform, welche insbesondere auf der vierten Ausführungsform aufbaut, wobei bei der neunten Ausführungsform das Zahnrad 70 vorgesehen ist. Ferner sind bei der neunten Ausführungsform der Eingang 46 und der Ausgang 50 auf derselben Seite angeordnet.

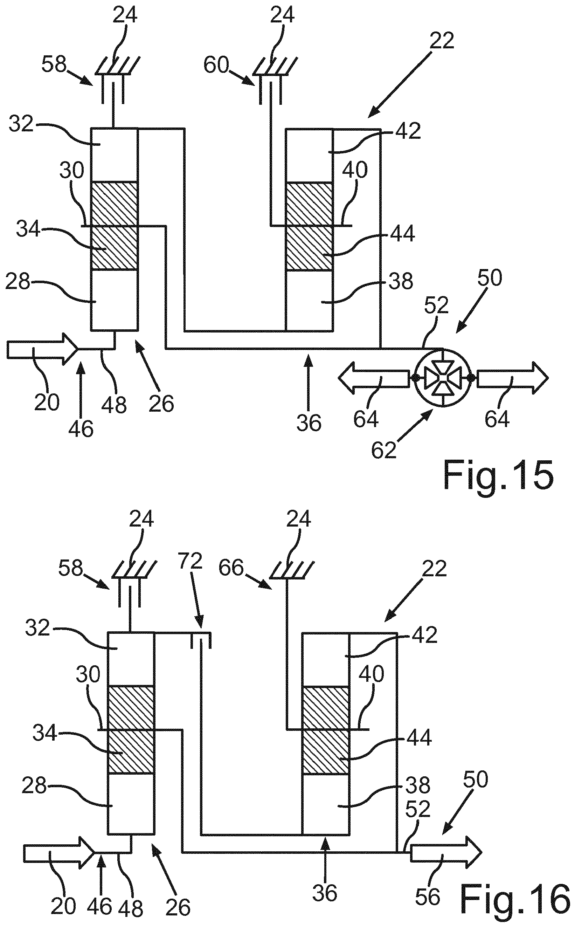

Fig. 10 zeigt eine zehnte Ausführungsform, welche auf der neunten Ausführungsform aufbaut, wobei bei der zehnten Ausführungsform der Eingang 46 und der Ausgang 50 auf einander gegenüberliegenden Seiten angeordnet sind. Fig. 16 zeigt eine 16. Ausführungsform, bei welcher die permanent drehfeste Kopplung des Hohlrads 32 mit dem Sonnenrad 38 aufgehoben ist. Anstelle dieser permanenten drehfesten Kopplung ist ein Schaltelement 72 vorgesehen, welches ein Kopplungselement ist und zwischen einem Koppelzustand und einem Entkoppelzustand umschaltbar ist. Ferner ist bei der 16. Ausführungsform vorgesehen, dass - wie bei der fünften Ausführungsform - der Planetenträger 40, insbesondere über das Festglied 66, permanent drehfest an dem Gehäuse 24 festgelegt ist. In dem Koppelzustand des Schaltelements 72 ist das Hohlrad 32 über das Schaltelement 72 drehfest mit dem Sonnenrad 38 gekoppelt beziehungsweise verbunden, sodass das Hohlrad 32 mit dem Sonnenrad 38 verblockt ist. Wird dann beispielsweise die Getriebevorrichtung 22 angetrieben, so laufen das Hohlrad 32 und das Sonnenrad 38, insbesondere dann, wenn sich das Schaltelement 58 in seinem Freigabezustand befindet, als Block und somit gemeinsam um die Hauptdrehachse um, sodass sich das Hohlrad 32 und Sonnenrad 38 gemeinsam um die Hauptdrehachse relativ zu dem Gehäuse 24 drehen. In dem Freigabezustand jedoch gibt das Schaltelement 72 das Hohlrad 32 und das Sonnenrad 38 frei, sodass sich diese insbesondere dann, wenn die Getriebevorrichtung 22 angetrieben wird, relativ zueinander drehen können, insbesondere um die Hauptdrehachse. Befindet sich das Schaltelement 72 in seinem Koppelzustand, während sich das Schaltelement 58 in seinem Sperrzustand befindet, so ist das Hohlrad 32 über das Schaltelement 58 drehfest an dem Gehäuse 24 festgelegt, während das Sonnenrad 38 über die Schaltelemente 72 und 58 drehfest an dem Gehäuse 24 festgelegt ist. Folglich ist insbesondere das Sonnenrad 38 über das Hohlrad 32 drehfest an dem Gehäuse 24 festgelegt.

Das jeweilige Schaltelement 58, 60, 68 beziehungsweise 72 kann als reibschlüssiges Kopplungselement und dabei beispielsweise als Bremse, insbesondere als Lamellenbremse beziehungsweise Lamellenkupplung, oder als Bremsband ausgebildet sein. Ferner ist es denkbar, dass das jeweilige Schaltelement 58, 60, 68 beziehungsweise 72 als formschlüssiges Schaltelement und dabei beispielsweise als Klaue beziehungsweise Klauenkupplung, insbesondere mit oder ohne Synchronisierung, ausgebildet ist. Insbesondere kann durch den Einsatz des jeweiligen Schaltelements und der Planetenradsätze 26 und 36 die Getriebevorrichtung 22 als schaltfähige, insbesondere als lastschaltfähige, Mehrgangstruktur, insbesondere Zweigangstruktur, ausgestaltet sein, wobei die Getriebevorrichtung 22 beispielsweise mehrere, insbesondere genau zwei, Gänge, insbesondere Fahrgänge, aufweisen kann. Insbesondere lassen sich die folgenden Vorteile darstellen:
- normale Drehzahlen und somit geringe Schleppverluste
- achsparallele Anordnung eignet sich für elektrische Maschinen mit geringem Durchmesser
- sehr gute Stapelungsmöglichkeit
- alle Schaltelemente können als Bremsen ausgebildet und damit sehr gut zugänglich sein
- wenigstens eines der Schaltelemente kann als Klaue beziehungsweise als formschlüssiges Schaltelement ausgeführt werden
- sind beispielsweise alle Schaltelemente als Klaue ausgebildet, so können insbesondere dann, wenn auf Lastschaltbarkeit verzichtet wird, die Schleppverluste besonders gering gehalten werden.

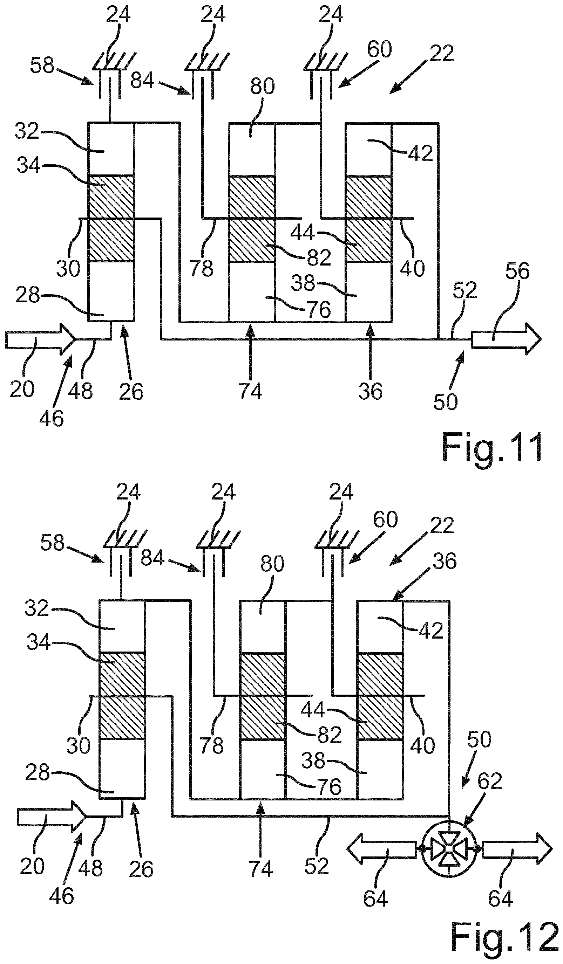

Fig. 11 zeigt eine elfte Ausführungsform, bei welcher die Getriebevorrichtung 22 einen dritten Planetenradsatz 74 aufweist. Der dritte Planetenradsatz 74 weist ein drittes Sonnenrad 76, einen dritten Planetenträger 78 und ein drittes Hohlrad 80 auf. Außerdem umfasst der dritte Planetenradsatz 74 wenigstens ein oder mehrere dritte Planetenräder 82, wobei das wenigstens eine dritte Planetenrad 82 drehbar an dem Planetenträger 78 gelagert ist und mit dem Sonnenrad 76 und mit dem Hohlrad 80 kämmt. Bei der elften Ausführungsform ist das dritte Sonnenrad 76 permanent drehfest mit dem zweiten Sonnenrad 38 verbunden. Außerdem ist der Planetenträger 40 permanent drehfest mit dem Hohlrad 80 verbunden, sodass mittels des Schaltelements 60 das Hohlrad 80 und der Planetenträger 40, insbesondere gemeinsam beziehungsweise gleichzeitig, drehfest an dem Gehäuse 24 festlegbar sind.

Dabei ist ein beispielsweise reibschlüssiges oder formschlüssiges Schaltelement 84 vorgesehen, mittels welchem das dritte Hohlrad 80 oder aber vorliegend bei der elften Ausführungsform der dritte Planetenträger 78 drehfest an dem Gehäuse 24 festlegbar ist. Die vorigen und folgenden Ausführungen zu den Schaltelementen 58, 60, 68 und 72 sind ohne weiteres auch auf das Schaltelement 84 übertragbar und umgekehrt, sodass beispielsweise auch das Schaltelement 84 zwischen einem Freigabezustand und einem Sperrzustand umschaltbar, insbesondere bewegbar, ist. In dem Sperrzustand des Schaltelements 84 ist über das Schaltelement 84 das Hohlrad 80 beziehungsweise der Planetenträger 78 drehfest an dem Gehäuse 24 festgelegt, sodass sich das Hohlrad 80 beziehungsweise der Planetenträger 78 nicht um das Gehäuse 24 drehen kann. In dem Freigabezustand des Schaltelements 84 jedoch gibt dieses das Hohlrad 80 beziehungsweise den Planetenträger 78 frei, sodass insbesondere dann, wenn die Getriebevorrichtung 22 angetrieben wird, sich das Hohlrad 80 beziehungsweise der Planetenträger 78, insbesondere um die Hauptdrehachse, relativ zu dem Gehäuse 24 drehen kann.

Fig. 12 zeigt eine zwölfte Ausführungsform, bei welcher das Achsgetriebe 62 vorgesehen ist. Bei der elften und zwölften Ausführungsform ist das Hohlrad 42 permanent drehfest mit der Ausgangswelle 52 und somit mit dem Planetenträger 30 verbunden. Bei der elften und zwölften Ausführungsform sind alle drei Planetenradsätze 26, 36 und 74 in axialer Richtung der Getriebevorrichtung 22 hintereinander beziehungsweise aufeinanderfolgend angeordnet, sodass eine koaxiale Anordnung vorgesehen ist. Durch die Verwendung der drei Planetenradsätze 62, 36 und 74 kann beispielsweise eine Drei-Gang-Struktur realisiert werden, sodass beispielsweise drei Gänge, insbesondere Fahrgänge, der Getriebevorrichtung 22 darstellbar sind.

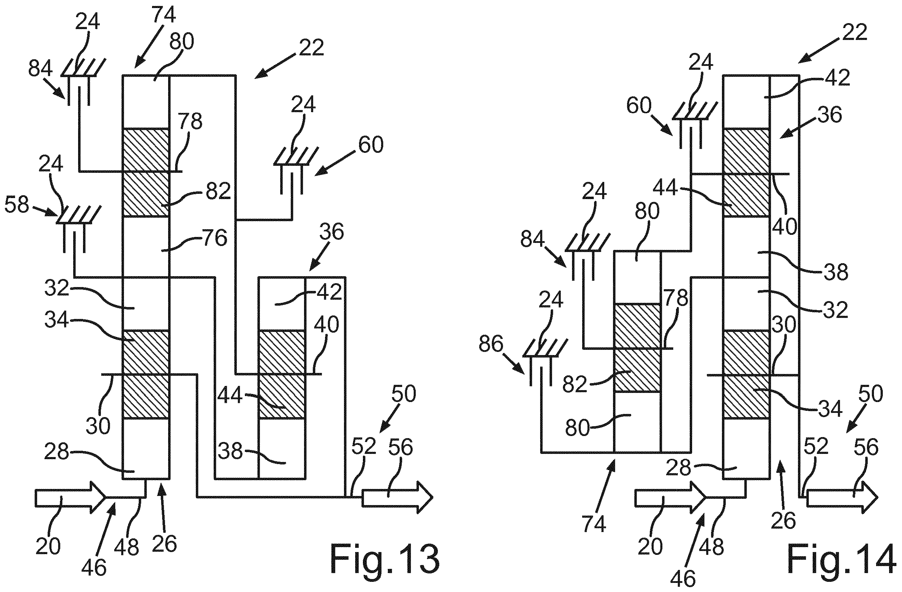

Fig. 13 zeigt eine 13. Ausführungsform der Getriebevorrichtung 22. Bei der 13. Ausführungsform sind die Planetenradsätze 26 und 74 gestapelt, während beispielsweise der Planetenradsatz 36 koaxial zu dem Planetenradsatz 26 beziehungsweise in axialer Richtung der Getriebevorrichtung 22 auf den Planetenradsatz 26 folgend angeordnet ist. Um den Bauraumbedarf, insbesondere in radialer Richtung, besonders gering halten zu können, weist beispielsweise bei der 13 Ausführungsform das Hohlrad 32 eine Verzahnung, insbesondere eine Außenverzahnung, auf, durch welche das Sonnenrad 76 gebildet ist.

Weist, insbesondere bei der 13. Ausführungsform, die Getriebevorrichtung 22 beziehungsweise die Planetenradsätze 26, 36 und 74 eine große Standübersetzung beziehungsweise große Standübersetzungen auf, so kann beispielsweise eine weitere, vor- oder nachgeschaltete Übersetzungsstufe zum Einsatz kommen, um jeweilige Drehzahlen vorteilhaft anpassen zu können.

Fig. 14 zeigt eine 14. Ausführungsform, bei welcher die Planetenradsätze 26 und 36 gestapelt sind. Dabei weist beispielsweise das Hohlrad 32 eine Verzahnung, insbesondere eine Außenverzahnung, auf, durch welche beispielsweise das Sonnenrad 38 gebildet ist.

Bei der 14. Ausführungsform ist ferner ein beispielsweise als reibschlüssiges oder formschlüssiges Schaltelement 86 vorgesehen, mittels welchem das Sonnenrad 80 des Planetenradsatzes 74 an dem Gehäuse 24 drehfest festlegbar ist. Dabei sind die vorigen und folgenden Ausführungen zu den Schaltelementen 58, 60, 68, 72 und 84 ohne weiteres auch auf das Schaltelement 86 übertragbar und umgekehrt, sodass auch das Schaltelement 86 zwischen einem Sperrzustand und einem Freigabezustand umschaltbar ist. In dem Sperrzustand ist das Sonnenrad 80 über das Schaltelement 86 drehfest an dem Gehäuse 24 festgelegt, sodass sich das Sonnenrad 80 nicht relativ zu dem Gehäuse 24 drehen kann, insbesondere auch dann nicht, wenn die Getriebevorrichtung 22 angetrieben wird. Befindet sich jedoch das Schaltelement 86 in seinem Freigabezustand, so gibt es das Sonnenrad 80 frei, sodass das Sonnenrad 38 insbesondere dann, wenn die Getriebevorrichtung 22 angetrieben wird, um die Hauptdrehachse relativ zu dem Gehäuse 24 drehen kann.

Fig. 15 zeigt eine 15. Ausführungsform, welche im Grunde der dritten Ausführungsform entspricht, wobei bei der 15. Ausführungsform das Achsgetriebe 62 vorgesehen ist.

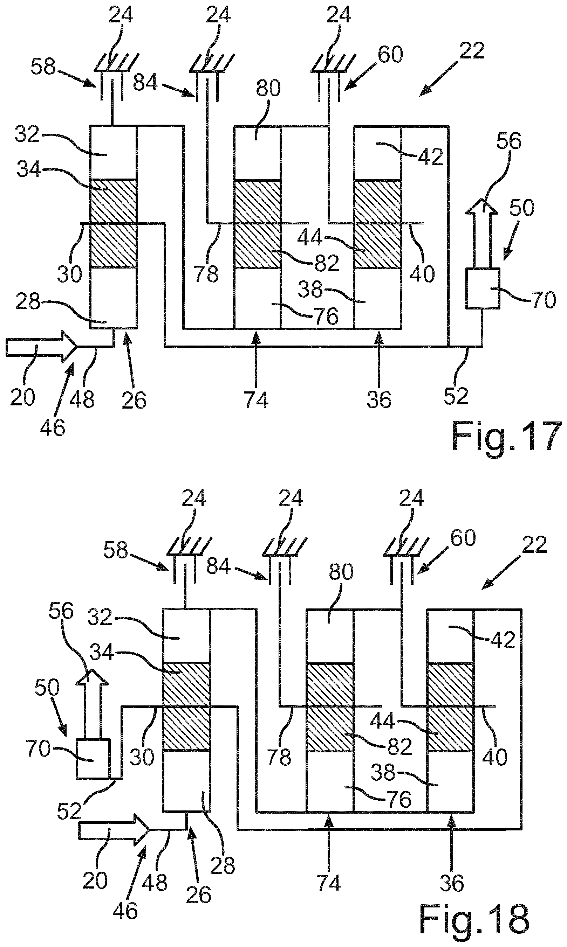

Fig. 17 zeigt eine 17. Ausführungsform, welche im Grunde der elften Ausführungsform entspricht, mit dem Unterschied, dass das Zahnrad 70 vorgesehen ist.

Fig. 18 zeigt eine 18. Ausführungsform, bei welcher das Zahnrad 70 vorgesehen ist. Während jedoch bei der 17. Ausführungsform der Eingang 46 und der Ausgang 50 auf in axialer Richtung der Getriebevorrichtung 22 gegenüberliegenden Seiten angeordnet sind, sind bei der 18 Ausführungsform der Eingang 46 und der Ausgang 50 auf derselben Seite angeordnet.

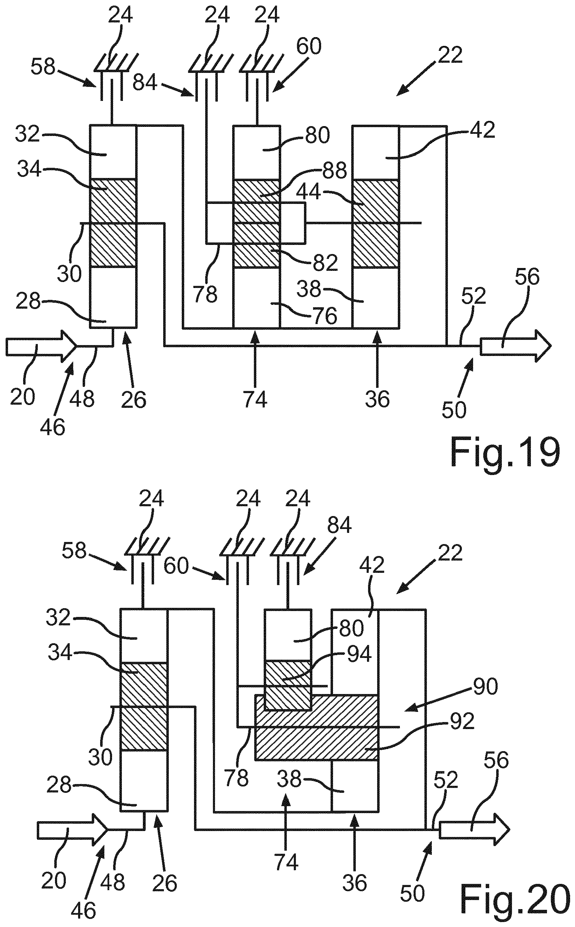

Fig. 19 zeigt eine 19. Ausführungsform, bei welcher der dritte Planetenradsatz 74 das wenigstens eine dritte Planetenrad 82 und wenigstens ein viertes Planetenrad 88 aufweist, welches mit dem Hohlrad 80 und mit dem Planetenrad 82 kämmt. Das Planetenrad 88 kämmt dabei nicht mit dem Sonnenrad 76. Das Planetenrad 82 kämmt mit dem Sonnenrad 76 und mit dem Planetenrad 88, jedoch nicht mit dem Hohlrad 80. Dabei sind die Planetenräder 82 und 88 an dem Planetenträger 78 drehbar gelagert, welcher ein den Planetenrädern 82 und 88 gemeinsamer Planetenträger ist. Bei der 19. Ausführungsform ist darüber hinaus das wenigstens eine Planetenrad 44 drehbar an dem Planetenträger 78 gelagert, sodass der Planetenträger 78 ein den Planetenradsätzen 36 und 74, insbesondere den Planetenrädern 44, 82 und 88 gemeinsamer Planetenträger ist.

Schließlich zeigt Fig. 20 eine 20. Ausführungsform, bei welcher die Planetenradsätze 26 und 74 einen inversen Ravigneaux-Satz bilden. Der inverse Ravigneaux-Satz ist mit 90 bezeichnet und umfasst genau ein Ravigneaux-Sonnenrad in Form des Sonnenrads 38. Der Ravigneaux-Satz 90 umfasst wenigstens ein langes Planetenrad 92 und wenigstens ein kurzes Planetenrad 94. Darüber hinaus umfasst der inverse Ravigneaux-Satz 90 zwei Hohlräder 42 und 80, welche insbesondere unterschiedlich groß sind und dabei beispielsweise voneinander unterschiedliche Durchmesser, insbesondere Innendurchmesser, aufweisen.

Bei dem Ravigneaux-Satz 90 sind die Planetenräder 92 und 94 drehbar an dem den Planetenrädern 92 und 94 gemeinsamen Planetenträger 78 gelagert, wobei das Sonnenrad 38 mit dem Planetenrad 92, nicht jedoch mit dem Planetenrad 94 kämmt. Das Planetenrad 92 kämmt mit dem Sonnenrad 38, mit dem Hohlrad 42 und mit dem Planetenrad 94, nicht jedoch mit dem Hohlrad 80. Das Planetenrad 94 wiederum kämmt mit dem Planetenrad 92 und mit dem Hohlrad 80, nicht jedoch mit dem Hohlrad 42 und auch nicht mit dem Sonnenrad 38.

Beispielsweise ausgehend von der elften Ausführungsform kann der zweite Planetenradsatz 36 oder der dritte Planetenradsatz 76 entfallen, um dadurch eine weit gespreizte Zwei-Gang-Struktur zu realisieren. Insgesamt ist erkennbar, dass sich ein modularer Baukasten realisieren lässt, mittels welchem auf einfache Weise unterschiedliche Ausführungsformen dargestellt werden können. Insbesondere können sich beispielsweise durch Verwendung der drei Planetenradsätze 26, 36 und 76 folgende Vorteile realisieren lassen:
- sehr niedrige Drehzahlen, wodurch Schleppverluste gering gehalten werden können
- koaxiale Anordnung möglich
- sehr gute Stapelungsmöglichkeit
- drei Fahrgänge mit nur drei Schaltelementen
- alle Schaltelemente können als Bremsen ausgebildet und dadurch sehr gut zugänglich sein
- wenigstens eines der Schaltelemente kann als Klaue ausgeführt werden
- wird im zweiten Fahrgang angefahren, so können zwei Schaltelemente als Klauen ausgebildet werden
- der erste Fahrgang kann als Kriech- oder Schwerlastgang verwendet werden
- relativ gute Verzahnungswirkungsgrade, da Gesamtübersetzung durch den Radsatz erfolgt, vor allem im dritten Gang, sodass keine weiteren Verzahnungsverluste durch ein Stirnraddifferential bewirkt werden
- Drehzahldifferenzen in den beispielsweise als Klauenschaltelementen ausgebildeten Schaltelementen sind sehr gering, wodurch eine einfache Synchronisierung möglich ist
- einfacher Umbau zu inversem Ravigneaux-Satz möglich.

## Patentansprüche

1. Getriebevorrichtung (22) für einen elektrischen Antrieb eines Kraftfahrzeug, mit einem Gehäuse (24), mit einem in dem Gehäuse (24) angeordneten ersten Planetenradsatz (26), welcher ein erstes Sonnenrad (28), einen ersten Planetenträger (30) und ein erstes Hohlrad (32) aufweist, mit einem in dem Gehäuse (24) angeordneten zweiten Planetenradsatz (36), welcher ein zweites Sonnenrad (38), einen zweiten Planetenträger (40) und ein drehfest mit dem ersten Planententräger (30) gekoppeltes oder koppelbares zweites Hohlrad (42) aufweist, mit einer von einem Rotor (16) einer elektrischen Maschine (12) antreibbaren Eingangswelle (48), und mit einer Ausgangswelle (52), mittels welcher wenigstens ein Rad (54) des Kraftfahrzeugs antreibbar ist,
wobei der erste Planetenträger (30) permanent drehfest mit der Ausgangswelle (52) gekoppelt ist, wobei
- die Eingangswelle (48) permanent drehfest mit dem ersten Sonnenrad (28) verbunden ist; und
- das erste Hohlrad (32) drehfest mit dem zweiten Sonnenrad (38) gekoppelt oder koppelbar ist,
wobei in dem Gehäuse (24) ein dritter Planetenradsatz (74) angeordnet ist, welcher ein drittes Sonnenrad (76), einen dritten Planetenträger (78) und ein drittes Hohlrad (80) aufweist,
das dritte Sonnenrad (76) mit dem zweiten Sonnenrad (38) permanent drehfest verbunden ist,
**dadurch gekennzeichnet, dass**
ein drittes Schaltelement (84) vorgesehen ist, mittels welchem das dritte Hohlrad (80) oder der dritte Planetenträger (78) an dem Gehäuse (24) festlegbar ist.

2. Getriebevorrichtung (22) nach Anspruch 1,
**dadurch gekennzeichnet, dass**
ein erstes Schaltelement (58) vorgesehen ist, mittels welchem das erste Hohlrad (32) an dem Gehäuse (24) festlegbar ist

3. Getriebevorrichtung (22) nach Anspruch 1 oder 2,
**dadurch gekennzeichnet, dass**
ein zweites Schaltelement (60) vorgesehen ist, mittels welchem der zweite Planetenträger (40) an dem Gehäuse (24) festlegbar ist.

4. Getriebevorrichtung (22) nach einem der vorhergehenden Ansprüche,
**dadurch gekennzeichnet, dass**
mittels des dritten Schaltelements (84) das dritte Hohlrad (80) an dem Gehäuse (24) festlegbar ist, wobei der dritte Planetenträger (78) permanent drehfest mit dem zweiten Planetenträger (40) gekoppelt ist.

5. Getriebevorrichtung (22) nach Anspruch 4,
**dadurch gekennzeichnet, dass**
der zweite Planetenradsatz (36) und der dritte Planetenradsatz (74) einen inversen Ravigneaux-Satz (90) bilden.

6. Getriebevorrichtung (22) nach einem der vorhergehenden Ansprüche,
**dadurch gekennzeichnet, dass**
ein Achsgetriebe (62) vorgesehen ist, welches wenigstens eine Seitenwelle aufweist, die koaxial zu der Eingangswelle (48) angeordnet ist.

7. Getriebevorrichtung (22) nach einem der vorhergehenden Ansprüche,
**dadurch gekennzeichnet, dass**
das jeweilige Schaltelement (58, 60, 84) als formschlüssiges oder reibschlüssiges Schaltelement ausgebildet ist.

8. Elektrischer Antrieb (10) für ein Kraftfahrzeug mit einer Getriebevorrichtung (22) nach Anspruch 1,
**gekennzeichnet durch**
eine elektrische Maschine (12), welche einen Rotor aufweist, welcher mit der Eingangswelle (48) gekoppelt oder koppelbar ist.

## Claims

1. Transmission device (22) for an electric drive of a motor vehicle, comprising a housing (24), comprising a first planetary gear set (26), which is arranged in the housing (24) and which has a first sun gear (28), a first planet carrier (30) and a first ring gear (32), comprising a second planetary gear set (36), which is arranged in the housing (24) and which has a second sun gear (38), a second planet carrier (40) and a second ring gear (42), which is or can be coupled to the first planet carrier (30) for conjoint rotation therewith, comprising an input shaft (48), which can be driven by a rotor (16) of an electric machine (12), and comprising an output shaft (52), by means of which at least one wheel (54) of the motor vehicle can be driven,
wherein the first planet carrier (30) is permanently coupled to the output shaft (52) for conjoint rotation therewith, wherein
- the input shaft (48) is permanently connected to the first sun gear (28) for conjoint rotation therewith; and
- the first ring gear (32) is or can be coupled to the second sun gear (38) for conjoint rotation therewith,
wherein a third planetary gear set (74) is arranged in the housing (24), which third planetary gear set comprises a third sun gear (76), a third planet carrier (78) and a third ring gear (80),
the third sun gear (76) is permanently connected to the second sun gear (38) for conjoint rotation therewith,
**characterised in that**
a third shifting element (84) is provided, by means of which the third ring gear (80) or the third planet carrier (78) can be secured to the housing (24).

2. Transmission device (22) according to claim 1, **characterised in that**
a first shifting element (58) is provided, by means of which the first ring gear (32) can be secured to the housing (24).

3. Transmission device (22) according to claim 1 or 2, **characterised in that**
a second shifting element (60) is provided, by means of which the second planet carrier (40) can be secured to the housing (24).

4. Transmission device (22) according to any of the preceding claims, **characterised in that** the third ring gear (80) can be secured to the housing (24) by means of the third shifting element (84), wherein the third planet carrier (78) is permanently coupled to the second planet carrier (40) for conjoint rotation therewith.

5. Transmission device (22) according to claim 4, **characterised in that**
the second planetary gear set (36) and the third planetary gear set (74) form an inverse Ravigneaux set (90).

6. Transmission device (22) according to any of the preceding claims, **characterised in that**
an axle drive (62) is provided, which comprises at least one lateral shaft that is arranged coaxially with the input shaft (48).

7. Transmission device (22) according to any of the preceding claims, **characterised in that** each shifting element (58, 60, 84) is designed as a positive-locking or friction-locking shifting element.

8. Electric drive (10) for a motor vehicle having a transmission device (22) according to claim 1, **characterised by**
an electric machine (12) that comprises a rotor that is or can be coupled to the input shaft (48).

## Revendications

1. Dispositif de transmission (22) pour un entraînement électrique d'un véhicule à moteur, comprenant un carter (24), comprenant un train planétaire (26) disposé dans le carter (24), lequel train planétaire comporte un premier pignon planétaire (28), un premier porte satellites (30) et une première couronne (32) avec laquelle deux trains planétaires (36) sont disposés dans le carter (24), lesquels trains planétaires comportent un second pignon planétaire (30), un second porte satellites (40) et une seconde couronne (42) accouplée ou pouvant être accouplé au premier porte satellites (30), comportant un arbre d'entrée (48) pouvant être mené par un rotor (16) du moteur électrique (12), et comportant un arbre de sortie (52) avec lequel au moins une roue (54) du véhicule à moteur peut être entraînée,
Le premier porte satellites (30) étant accouplé solidaire en rotation en continu avec l'arbre de sortie (52),
- l'arbre d'entrée (48) étant relié en continu solidaire en rotation avec le premier pignon planétaire (28) ; et
- La première couronne (32) pouvant être accouplé ou étant accouplé solidaire en rotation à la seconde couronne (38),
Dans le carter (24) est disposé un troisième train planétaire (38) qui comportent une troisième pignon planétaire, un troisième porte satellites (78) et une troisième couronne (80),
Le troisième pignon planétaire (76) étant reliée solidaire en rotation en continu au deuxième pignon planétaire (38),
**Caractérisé en ce que**
Il est prévu un troisième élément de commutation (84) qui permet de fixer la troisième couronne (80) ou le troisième porte satellites (70) sur le carter.

2. Dispositif de transmission (22) selon la revendication 1, **caractérisé en ce qu'**il est prévu un premier élément de commutation (58) avec lequel la première couronne (32) peut être fixé au boîtier (24).

3. Dispositif de transmission (22) selon la revendication 1 ou la revendication 2, **caractérisé en ce qu'**il est prévu un second élément de commutation (60) avec lequel le second porte- satellites (40) peut être fixé sur le boîtier (24).

4. Dispositif de transmission (22) selon l'une quelconque des revendications précédentes, **caractérisé en ce qu'**au moyen du troisième élément de commutation (84) la troisième couronne (80) peut être fixée au boîtier, le troisième porte-satellites (78) étant accouplé en permanence solidaire en rotation au deuxième porte-satellites (40).

5. Dispositif de transmission (22) selon la revendication 4, **caractérisé en ce que** le deuxième train planétaire (36) et le troisième train planétaire (74) forment un ensemble engrenage de Ravineaux (90).

6. Dispositif de transmission (22) selon l'une quelconque des revendications précédentes, **caractérisé en ce qu'**il est prévu un pont (62) qui comprend au moins un arbre latéral qui est disposé coaxialement à l'arbre d'entrée (48).

7. Dispositif de transmission (22) selon l'une quelconque des revendications précédentes, **caractérisé en ce que** chaque élément de commutation (58, 60, 84) étant conçu sous forme d'un élément de commutation en complémentarité de forme ou par friction.

8. Transmission électrique (10) pour un véhicule à moteur comprenant un dispositif de transmission (22) selon la revendication 1, **caractérisé en ce qu'**un moteur électrique (12) qui comprend un rotor lequel est accouplé ou peut être accouplé à l'arbre d'entrée (48).
